# EUROPEAN PATENT SPECIFICATION

(11) **EP 2 656 119 B1**
(45) Date of publication and mention of the grant of the patent: **26.08.2015**
(21) Application number: 11810930.5
(22) Date of filing: 13.12.2011
(51) Int. Cl.: G02B 1/11

(54) **GLASS-LIKE POLYMERIC ANTIREFLECTIVE FILMS COATED WITH SILICA NANOPARTICLES, METHODS OF MAKING AND LIGHT ABSORBING DEVICES USING SAME**
GLASARTIGE ANTIREFLEKTIERENDE, MIT KIESELSÄURENANOPARTIKELN BESCHICHTETE POLYMERFOLIEN, VERFAHREN ZUR HERSTELLUNG UND LICHTABSORBIERENDE VORRICHTUNGEN DAMIT
FILMS ANTI-RÉFLÉCHISSANTS POLYMÈRES ET VITREUX REVÊTUS DE NANOPARTICULES DE SILICE, PROCÉDÉS DE FABRICATION ET DISPOSITIFS PHOTO-ABSORBANTS LES UTILISANT

(30) Priority: 20.12.2010 US 201061424707 P
(43) Date of publication of application: 30.10.2013
(73) Proprietor: 3M Innovative Properties Company, Saint Paul, MN 55133-3427 (US)
(72) Inventor: PETT, Todd, G., Saint Paul, Minnesota 55133-3427 (US); HEBRINK, Timothy, J., Saint Paul, Minnesota 55133-3427 (US); WRIGHT, Robin, E., Saint Paul, Minnesota 55133-3427 (US); DAVID, Moses, M., Saint Paul, Minnesota 55133-3427 (US); MCCLURE, Donald, J., Saint Paul, Minnesota 55133-3427 (US); JING, Naiyong, Saint Paul, Minnesota 55133-3427 (US); STROBEL, Mark, A., Saint Paul, Minnesota 55133-3427 (US)
(74) Representative: Herzog, Fiesser & Partner Patentanwälte PartG mbB
(86) International application number: PCT/US2011/064613
(87) International publication number: WO 2012/087663

(56) References cited:
- WO-A1-2009/145049
- MURAHARA M ET AL: "Water-resistant coating on optical material by photo-oxidation of silicone oil", PROCEEDINGS OF SPIE, SPIE, US, vol. 5991, 1 January 2005 (2005-01-01), pages 599118/1-599118/9, XP009108857, ISSN: 0277-786X, DOI: 10.1117/12.638773
- MATIENZO L J ET AL: "Transformation of poly(dimethylsiloxane) into thin surface films of SiO x by UV/ozone treatment. Part II: segregation and modification of doped polymer blends", JOURNAL OF MATERIALS SCIENCE, KLUWER ACADEMIC PUBLISHERS, BO, vol. 41, no. 19, 2 September 2006 (2006-09-02), pages 6374-6384, XP019435433, ISSN: 1573-4803, DOI: 10.1007/S10853-006-0713-4

## Description

This invention was made with Government support under Contract No. DE-EE0000587, awarded by DOE. The Government has certain rights in this invention.

The present invention pertains to transparent anti-reflective structured films, in particular, to transparent anti-reflective structured films comprising a cross-linked silicone elastomeric material coated with nanoparticles, and more particularly, to such films having anti-reflective structures with glass-like surfaces coated with silica nanoparticles; methods of making such films, and light absorbing devices comprising such films.

A prior art structured film is disclosed in WO 2009/145049

### BACKGROUND

With the rising costs of conventional power generation based on burning fossil fuels (e.g., oil and coal based power plants), and the desire to reduce associated greenhouse gases, investment into non-conventional sources of power have increased. For example, the US Department of Energy has invested heavily into the research and development of solar power generation (e.g., solar energy based hot water and electricity generation). One such non-conventional source of power generation is the use of photovoltaic cells to convert solar light energy into electricity. Solar light energy has also been used to directly or indirectly heat water for residential and commercial use. Along with this increased level of interest, there is a need for improving the efficiency at which such non-conventional solar energy technologies can absorb light energy and thereby increase the amount of solar energy available for use.

### SUMMARY OF THE INVENTION

The present invention provides a way to improve the efficiency (i.e., increase the energy generating potential) of solar and other light energy absorbing technologies by enabling more useful light energy into the corresponding light absorbing element (e.g., photovoltaic cell).

Silicone elastomers are known for their stability under long-term ultra-violet light exposure, and they can be optically clear and tough. Unfortunately, silicone elastomers also have relatively tacky surfaces that tend to attract, pick-up and hold dirt and dust particles. Until now, this characteristic of picking-up and holding dirt and dust has made silicone elastomers an undesirable candidate for forming the exposed surface of a light energy absorbing or conversion device such as, e.g., an optically transparent prismatic cover for a photovoltaic cell. The present invention is predicated, at least in part, on the discovery that this tackiness of silicone elastomeric surfaces can be significantly reduced, and their resistance to dirt and dust particle pick-up significantly increased, by treating the structured surface of silicone elastomeric material so that it becomes a glass-like surface that comprises a SiO₂ stoichiometry. The resistance to dirt and dust particle pick-up can be further increased, while maintaining abrasion resistance, by coating the glass-like surface with inorganic nanoparticles

In one aspect of the present invention, a transparent anti-reflective structured film, sheet, web or the like is provided that comprises a structured film substrate comprising a structured face having anti-reflective structures defining a structured surface that is anti-reflective to light. At least the anti-reflective structures comprise a cross-linked silicone elastomeric material, with all, most or at least a substantial portion of the structured surface comprising a glass-like surface, and the glass-like surface comprising an SiO₂ stoichiometry. The glass-like surface is coated with a coating of at least one layer of agglomerates of silica nanoparticles, with the agglomerates comprising a three-dimensional porous network of silica nanoparticles, and the silica nanoparticles being bonded to adjacent silica nanoparticles.

It is desirable for the glass-like surface to comprise more than about 50 molar percent SiO₂. It can be desirable for the glass-like surface to comprise in the range of from more than about 50 molar percent SiO₂ to about 90 molar percent SiO₂, or. It can also be desirable for the glass-like surface to comprise in the range of from at least about 60 molar percent SiO₂ to about 90 molar percent SiO₂. Preferably, the glass-like surface comprises at least about 60, 65, 70, 75, 80 or 85 molar percent SiO₂. The glass-like surface may comprise at least some amount of SiOH. As used herein, any reference to SiOH includes not only SiOH but other constituents comprising Si and OH as well.

It is desirable for only an outer layer of each anti-reflective structure to be glass-like (i.e., for each anti-reflective structure to have a glass-like surface). The anti-reflective structures can project out from a base portion or backing of the structured film substrate. The depth of the glass-like surface depends on the settings (e.g., intensity and/or duration) of the treatment (e.g., flame temperature and duration, UV radiation intensity and duration, oxygen plasma power and duration, etc.) used to form the glass-like surface on at least a significant portion of the anti-reflective structures.

In another aspect of the present invention, a method is provided for making a transparent anti-reflective structured film according to the present invention. The method comprises providing a structured film substrate having a structured face comprising anti-reflective structures defining an anti-reflective structured surface that is anti-reflective to light, with at least the anti-reflective structures comprising a cross-linked silicone elastomeric material; and treating the anti-reflective structured surface so as to transform cross-linked silicone elastomeric material defining at least a substantial portion of the anti-reflective structured surface into a glass-like material comprising an SiO₂ stoichiometry, such that at least a substantial portion of the anti-reflective structured surface comprises a glass-like surface having the SiO₂ stoichiometry; and coating the glass-like surface with a coating of at least one layer of agglomerates of silica nanoparticles, with the agglomerates comprising a three-dimensional porous network of silica nanoparticles, and the silica nanoparticles being bonded to adjacent silica nanoparticles.

The step of providing a structured film substrate can comprise providing a silicone precursor material that is curable so as to form the cross-linked silicone elastomeric material; forming the silicone precursor material into the shape of the structured film substrate; and curing the silicone precursor material so as to form the structured film substrate. The step of coating the glass-like surface with at least one layer of agglomerates of silica nanoparticles can be performed using a conventional air-knife coating technique.

In an additional aspect of the present invention, a light energy absorbing device (e.g., solar hot water system, photovoltaic electric generating system, etc.) is provided that comprises a light absorber (e.g., solar hot water circulating tubes or other conduits, photovoltaic cell, etc.) and a transparent anti-reflective structured film. The light absorber has a light energy receiving face, and the transparent anti-reflective structured film is disposed so as to be between a source of light energy (e.g., the sun) and the light energy receiving face, at least while light energy from the source is being absorbed by the light absorber. Light energy absorbing devices (e.g., solar energy conversion devices) are used in a wide array of applications, both earth-bound applications and space-based applications. In some embodiments, the solar energy conversion device may be attached to a land-based, water-based, air-based and/or space-based vehicle, such as an automobile, a airplane, a train, a boat or a space satellite. Many of these environments can be very hostile to organic polymeric materials.

In a further aspect of the present invention, a method is provided for making a light energy absorbing device. This method comprises providing a transparent anti-reflective structured film according to the present invention, providing a light absorber having a light receiving face, and securing the anti-reflective structured film in relation to the light absorber so that light can pass through the anti-reflective structured film to the light receiving face of the light absorber.

As used herein and unless otherwise indicated, the term "film" is synonymous with a sheet, a web and like structures.

As used herein, the term "transparent" refers to the ability of a structure, e.g., the inventive film, to allow a desired bandwidth of light transmission therethrough. A structure can still be transparent, as that term is used herein, without also being considered clear. That is, a structure can be considered hazy and still be transparent as the term is used herein. It is desirable for a transparent structure according to the present invention to allow at least 85%, 91%, 92%, 93%, 94%, 95%, 96%, 97% or 98% light transmission therethrough. The present invention can be useful with a wide band of light wavelengths. For example, it can be desirable for the present invention to be transparent to the transmission of light within the wavelength band of from about 400 nm to about 2500 nm. This band generally corresponds to the band of visible light including near infrared (IR) light.

As used herein, the term "anti-reflective structures" refers to surface structures that change the angle of incidence of light such that the light enters the polymeric material beyond the critical angle and is internally transmitted.

As used herein, the term "glass-like surface" refers to the surface of a silicone elastomeric substrate (i.e., a substrate comprising a cross-linked silicone elastomeric material, a thermoplastic silicone elastomeric material, or both), where the surface comprises a silica (SiO₂) stoichiometry and exhibits resistance to dirt and dust particle pick-up (i.e., dirt resistance) and/or abrasion resistance comparable or at least similar to that exhibited by a 100% glass surface. A "glass-like surface" can be hydrophilic, but may not need to be hydrophilic. In addition, a "glass-like surface" exhibits a degree of light transmission, after being subjected to the dirt pick-up test, the falling sand test or both tests, as described below, that is acceptable for its intended light energy absorbing application. As used herein, a portion of the anti-reflective structured surface is substantially glass-like, when that surface exhibits a desirable resistance to the Dirt Pick-Up Test, the Falling Sand Test, or both tests, as evidenced by the impact such testing has on the degree of light transmission and/or the change in light transmission exhibited by the glass-like surface after being so tested.

As used herein, the term "silica or SiO₂ stoichiometry" refers to a composition containing silicon and oxygen in proportions sufficiently close to the stoichiometry of silica (i.e., a 2 to 1 ratio of oxygen to silicon) that the composition exhibits at least some of the properties of silica glass. For example, a composition has a silica stoichiometry, when it has an oxygen to silicon ratio of at least 1.25 to 1.00, at least 1.5 to 1.0, at least 1.75 to 1.00 and preferably closer to or equal to an oxygen to silicon ratio of about 2.0 to 1.0.

The terms "comprises", "comprising", "including" and variations thereof do not have a limiting meaning where these terms appear in the description and claims.

The words "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein, "a," "an," "the," "at least one," and "one or more" are used interchangeably, unless the content clearly dictates otherwise.

The term "and/or" means one or all of the listed elements or a combination of any two or more of the listed elements (e.g., using UV light, UVO, oxygen plasma, and/or heat to treat the anti-reflective structured surface means using UV light, UVO, oxygen plasma, heat or any combination of the three).

Also herein, the recitations of numerical ranges by endpoints include all numbers subsumed within that range (e.g., the range 1 to 5 includes 1, 1.5, 2, 2.75, 3, 3.80, 4, 4.6, 5, 5.3, etc.) and any range within that range.

The uses of anti-reflective structured films, as disclosed herein, have demonstrated reductions in the amount of light that is reflected and does not reach the light absorbing element(s) of the light energy absorbing device. For example, such anti-reflective structured films have enabled conventional photovoltaic solar modules to experience average power output increases in the range of from about 3% to about 7%. The present invention can help maintain the transmission of light through such anti-reflective structured films, during the life of the light energy absorbing device, by improving the resistance to dirt and dust particle pick-up (i.e., dirt resistance) and/or abrasion resistance of the exposed surface of the anti-reflective structured film. In this way, the present invention can help to reduce the amount of incident light reflecting off of the light exposed surface(s) of such light energy absorbing devices. In particular, by having a glass-like surface, the structured face of the present invention is easier to clean (i.e., is more resistant to dirt pick-up), and has relatively good mechanical durability (e.g., resistance to falling sand) compared to the same silicone elastomeric material without a glass-like surface, as well as compared to the same structured face made with other polymeric materials (e.g., polyurethanes). Dirt and dust particles that do accumulate on such a structured face can also be relatively easier to clean.

Light energy absorbing devices, and especially the structured face of the anti-reflective structured film, may be exposed to a variety of detrimental conditions from outside environments. For example, the structured face can be exposed to environmental elements such as rain, wind, hail, snow, ice, blowing sand, and the like which can damage the structured surface of the structured face. In addition, long term exposure to other environmental conditions such as heat and UV radiation exposure from the sun can also cause degradation of the structured face. For example, many polymeric organic materials are susceptible to breaking down upon repeated exposure to UV radiation. Weatherability for light energy absorbing devices such as, for example, a solar energy conversion device is generally measured in years, because it is desirable that the materials be able to function for years without deterioration or loss of performance. It is desirable for the materials to be able to withstand up to 20 years of outdoor exposure without significant loss of optical transmission or mechanical integrity. Typical polymeric organic materials are not able to withstand outdoor exposure without loss of optical transmission or mechanical integrity for extended periods of time, such as 20 years. In at least some embodiments, the structured face of the present invention is expected to exhibit dirt resistance and/or mechanical durability in the range of from at least about 5 years to at least about 20 years, and possibly longer (e.g., at least about 25 years). In addition, because it is made of a silicone material, the structured face can exhibit long term UV stability of at least about 15 years, about 20 years or even about 25 years.

These and other potential advantages of the invention are further shown and described in the drawings and detailed description of this invention, where like reference numerals are used to represent similar parts. It is to be understood, however, that the drawings and description are for illustration purposes only and should not be read in a manner that would unduly limit the scope of this invention.

### BRIEF DESCRIPTION OF THE DRAWINGS

In the accompanying drawings:
FIG. 1 is a side edge view of a transparent anti-reflective structured film embodiment of the present invention;
FIG. 2 is a side edge view of an alternative transparent anti-reflective structured film embodiment of the present invention;
FIG. 3 is a side edge view of another transparent anti-reflective structured film embodiment of the present invention;
FIG. 4 is a side view of a light energy absorbing device embodiment having a transparent anti-reflective structured film disposed so as to increase the amount of light being absorbed by a light absorber; and
FIG. 5 is a side view of another light energy absorbing device embodiment showing the paths of reflection incident light can travel when so as to increase the amount of light absorbed by the light absorber.

### DETAILED DESCRIPTION OF CERTAIN EMBODIMENTS

The description that follows more particularly exemplifies illustrative embodiments. In describing the following embodiments of the present invention, specific terminology is used for the sake of clarity. The invention, however, is not intended to be limited to the specific terms so selected, and each term so selected includes all technical equivalents that operate similarly. In addition, the same reference numbers are used to identify the same or similar elements of the different illustrated embodiments.

Unless indicated to the contrary, the numerical parameters set forth in the foregoing specification and attached claims are approximations that can vary depending upon the desired properties sought to be obtained by those skilled in the art utilizing the teachings disclosed herein.

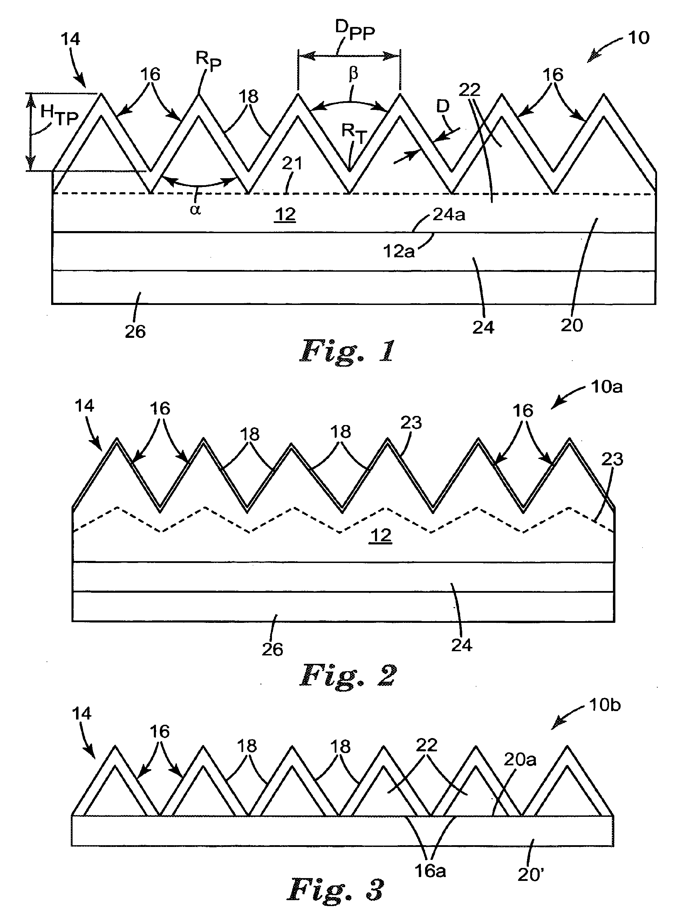

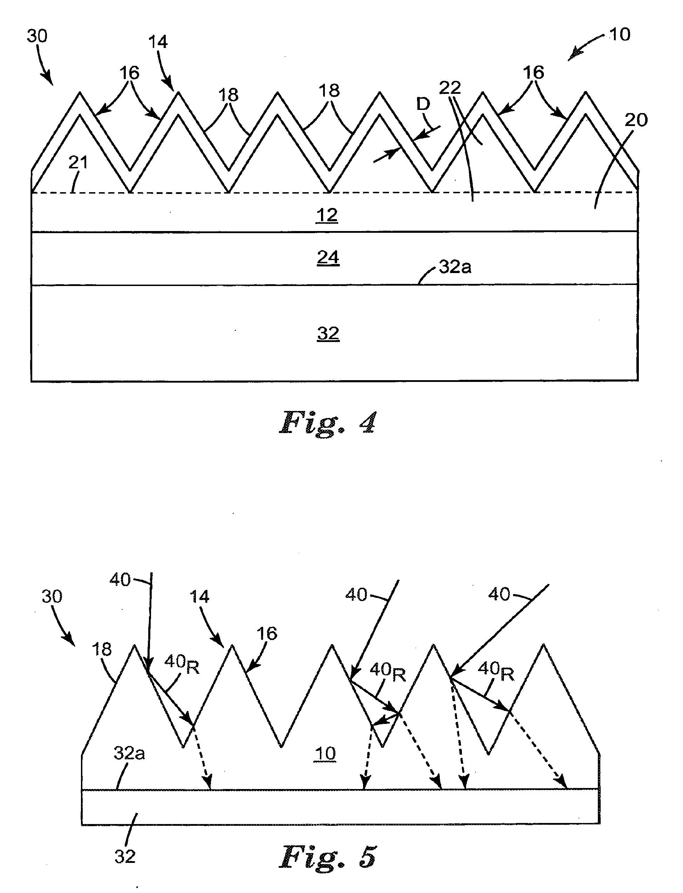

Referring to FIG. 1, an exemplary transparent anti-reflective structured film 10 comprises a structured film substrate 12 that has a major structured face 14 with anti-reflective structures, for example, in the form of prismatic riblets 16 that are anti-reflective to light (see FIG. 5). Each anti-reflective structure (e.g., riblet) 16 has a tip angle α, a trough to peak height H_{TP}, and a structured surface 18 that is exposed. Two adjacent anti-reflective structures (e.g., riblets) 16 define a trough angle ß and a peak to peak distance D_{PP} therebetween. The film 10 further comprises a base portion 20 from which the anti-reflective structures 16 extend. The base portion 20 can be an integrally formed part of the structures 16 as illustrated, or a separate layer as indicated by the dashed line 21. To improve their durability, it can be desirable to provide the riblets 16 with rounded peaks R_{P} and rounded troughs R_{T}.

The structured film substrate 12 comprises a cross-linked silicone elastomeric material. The silicone elastomeric material may be, for example, a two-part silicone rubber that can be thermally cured or condensation cured (e.g., Momentive RTV615 Silicone), a polydimethyl siloxane that can be electron beam (e-beam) cured (e.g., DMS-S51 available from Gelest, located at Morrisville, PA), etc., or a combination thereof. Other specific examples of silicone materials that may be used to form the structured surface are other hydrosilylation cure silicones such as, e.g., Sylgard 184, available from Dow Coming or Elastosil 601, available from Wacker Chemie AG); condensation cure silicones such as, e.g., 732 and 734 RTV silicones available from Dow Corning, and electron beam crosslinkable silicones such as, e.g., DMS-S42 available from Gelest or EL Polymer NA available from Whacker.

The structured face 14 is exposed to a treatment that transforms the cross-linked silicone elastomeric material defining all, most or at least a substantial portion of the surface 18 of each structure 16 into a glass-like material comprising a SiO₂ stoichiometry. Such treatments can include, for example, exposing the silicone material to one or a combination of vacuum-ultraviolet (VUV) light (e.g., a 172 nm Excimer VUV lamp treatment), vacuum-ultraviolet light and ozone (VUVO), a flame, oxygen plasma, and any other treatment that can convert silicon atoms in the silicone elastomeric material so as to exhibit the SiO₂ stoichiometry. This glass-like material is formed to a depth D into each structure 16. The depth D of the glass-like material depends on the exposure intensity and/or duration of the treatment. Thus, the glass-like material can be formed to a depth D that leaves a core or remainder 22 of cross-linked silicone elastomeric material in each of the structures 16 or that leaves each structure 16 completely formed of the glass-like material. With the later embodiment, there can be a remainder of the film substrate 12 (e.g., below dashed line 21) made of the untreated silicone elastomeric material. The closer the material forming the structured surface 18 exhibits a SiO₂ stoichiometry, the more likely the surface 18 will be resistant to dirt and dust particle pick-up (indicated by the dirt pick-up test results), abrasion resistant (indicated by the falling sand test results), or both.

Not wishing to be bound by theory, it is believed that the glass-like surface is formed by breaking Si-C bonds on and near the exposed surface of the anti-reflective structures through absorption of high energy photons or through thermal oxidation. After the breaking of such Si-C bonds, SiOH is produced, which condenses to form the SiO₂ stoichiometry.

The resistance to dirt and dust particle pick-up (indicated by the dirt pick-up test results) of the structured surface 18 can be further improved by coating the glass-like surface with a coating of at least one layer 23 of agglomerates of silica nanoparticles. The agglomerates comprise a three-dimensional porous network of silica nanoparticles, and the silica nanoparticles are bonded to adjacent silica nanoparticles. It can be desirable for the silica nanoparticles to have an average size (i.e., a major diameter or dimension) in the range of from about 5 nanometers (nm) up to and including about 100 nm. It can be desirable for the silica nanoparticle coating to have a thickness up to about 1000 nm, and it can also be desirable for the silica nanoparticle coating to have a thickness in the range of from about 20 nm up to and including about 100 nm. Applying coatings of greater than 100 nm can be problematic. For example, such thick coatings of nanoparticles can result in excessive agglomerating of the nanoparticles and/or can cause the coating to exhibit an undesirable coloring affect. Such a layer of silica nanoparticles may include any one or a combination of those disclosed in the PCT Publication No. WO2009/140482, Published US Patent Application No. US2001/036547, and US Patents Nos. US 3,986,997 and US 4,027,073, as well as PCT Application No. US2010/056773, US Provisional Patent Applications Nos. 61/390491 filed October 6, 2010 and 61/262423 filed November 18, 2009, which are all incorporated herein by reference in their entirety.

It can be desirable for the film 10, or any other transparent anti-reflective structured film according to the invention, to be used in combination with an optional transparent support backing 24. With such an embodiment, the support backing 24 has a major face 24a, and the structured film substrate 12 further comprises a major backing face 12a bonded to the major face 24a of the support backing 24 so as to form a transparent reinforced anti-reflective structured film. The support backing 24 can comprise a polymeric material or a glass or other transparent ceramic material. Exemplary polymeric materials may include at least one or a combination of a polymethyl(meth)acrylate (PMMA) film, polyvinylidene fluoride (PVDF) film, polyethylene terephalate (PET) film, primed PET film, polycarbonate film, cross-linked polyurethane film, acrylate film, ethylene tetrafluoroethylene (ETFE), fluorinated ethylenepropylene (FEP) film, or blends thereof. Ultra-violet light absorbers (such as, e.g., Tinuvin 1577 from Ciba Geigy, and Sukano TA11-10 MB03 PMMA-UVA and Sukano TA07-07 MV02 PET-UVA, both available from Sukano Polymers Corporation, Duncan, SC) can be incorporated into PMMA and blends of PVDF and PMMA for improved outdoor durability. The other transparent ceramic material may be, e.g., quartz crystal, etc. Transparent nonwoven or woven fiber materials, or chopped transparent fibers, may also be used to form the support backing 24. Such fiber materials can either be disposed in the silicone elastomeric material forming the structured film 10, disposed on the structured film 10, or both.

The transparent support backing 24 can also be chosen so as to dissipate static electricity. For example, the support backing can comprise one or more polymeric materials that enable the support backing 24 to dissipate static electricity. In order to dissipate static electricity, the transparent support backing 24 may also comprise an inherently static dissipative polymer such as those available as STATRITE X5091 polyurethane or STATRITE M809 polymethyl metacrylate from Lubrizol Corp. Alternatively, static dissipative salts such as FC4400 available from 3M Company can be blended into the polymer used to make the transparent support backing 24 (e.g., PVDF). In addition, or alternatively, the structured film substrate 12 can comprise such static dissipative salts.

Instead of, or in addition to the support backing 24, it can also be desirable for the film 10, or any other transparent anti-reflective structured film according to the invention, to be used in combination with an optional moisture barrier layer 26. In such an embodiment, the moisture barrier layer 26 can be formed, for example, by laminating, coating or otherwise bonding the moisture resistant barrier layer 26 indirectly through one or more intermediate layers (e.g., the support backing layer 24) or directly onto the major backing face 12a of the structured film substrate 12. Alternatively, the moisture barrier layer 26 can be formed by formulating the composition of the film 10 so as to exhibit moisture barrier properties (e.g., so as to inhibit moisture absorption, permeation, etc.).

The moisture barrier may be, for example, a barrier assembly or one or more of the barrier layers disclosed in International Patent Application No. PCT/US2009/062944, U.S. Patent Nos. 7,486,019 and 7,215,473, and Published U.S. Patent Application No. US 2006/0062937 A1, which are incorporated herein by reference in their entirety. A moisture barrier may be useful, because silicone has a high moisture vapor transmission rate and photovoltaic cells are typically moisture sensitive. Therefore, by being backed with a moisture barrier layer, a transparent anti-reflective structured film of the invention can be used directly on moisture sensitive photovoltaic cells (e.g., Copper/Indium/Gallium/Selenium or CIGS photovoltaic cells).

Referring to FIG. 2, in another embodiment 10a of the transparent anti-reflective structured film of the invention, the major structured face 14 is exposed to a degree/duration of treatment that causes all of the silicone elastomeric material of each of the anti-reflective structures 16 to be transformed into a glass-like material comprising a SiO₂ stoichiometry. With this embodiment, a remainder 22 of the film substrate 12 remains the silicone elastomeric material. Dashed line 23 separates the glass-like material portion of substrate 12 from the silicone elastomeric material portion. Again, the structured surface 18 can be further improved by coating the glass-like surface with a coating of at least one layer 23 of agglomerates of silica nanoparticles.

Referring to FIG. 3, in an additional embodiment 10b of the transparent anti-reflective structured film of the invention, each of the anti-reflective structures 16 extend out from a separate base portion 20'. The separate base portion 20' can be one or more layers of a cross-linked silicone elastomeric material, or the separate base 20' can be one or more layers of a different material (e.g., less expensive material like PMMA, PVDF and PET). The separate base 20' is adhered or otherwise bonded to the anti-reflective structures 16 by any suitable means, depending on the compatibility between the silicone elastomeric material and the different material. For example, the base portion 20' can have a major face 20a that is optionally coated with a primer or otherwise treated (e.g., a corona treatment) or prepared for receiving and bonding with a major backing face 16a of each of the silicone elastomeric anti-reflective structures 16. The anti-reflective structures 16 can be formed, for example, by using a tooling film (not shown) having a micro-replicated pattern formed in at least one of its major surfaces that matches the desired pattern of anti-reflective structures 16.

A layer of the desired silicone elastomeric precursor material can be extruded, coated or otherwise applied onto the surface of the base portion face 20a. The micro-replicated major surface of the tooling film can then be brought into contact with the layer of silicone elastomeric precursor material so as to form the exposed surface of the applied silicone elastomeric precursor material into the shape of the desired anti-reflective structures 16. Alternatively, the layer of silicone elastomeric precursor material can be extruded, coated or otherwise applied onto the micro-replicated major surface of the tooling film and then the exposed back surface of the applied precursor material can be laminated or otherwise brought into contact so as to bond with the surface of the base portion face 20a. Alternatively, the layer of silicone elastomeric precursor material can be extruded, coated or otherwise applied directly between the micro-replicated major surface of the tooling film and the surface of the base portion face 20a, as all three layers are laminated together such as, for example, by passing through a nip roll station. Once the formed precursor material is in contact with the surface of the base portion face 20a, the silicone elastomeric precursor material is initially cross-linked or cured, the tooling is removed, followed by subsequent treatment to produce the glass-like material in at least the surface 18 of the anti-reflective structures 16.

The anti-reflective structures can comprise at least one or a combination of prismatic, pyramidal, conical, hemispherical, parabolic, cylindrical, and columnar structures. The anti-reflective structures comprising prisms can have a prism tip angle α of less than about 90 degrees, less than or equal to about 60 degrees, less than or equal to about 30 degrees, or in the range of from about 10 degrees up to about 90 degrees. Such anti-reflective prism structure can also exhibit a trough-to-trough or peak-to-peak pitch or distance in the range of from about 2 microns to about 2 cm. The anti-reflective structures comprising prisms can also have a prism tip angle in the range of from about 15 degrees to about 75 degrees. The anti-reflective structures comprising prisms can also have a trough-to-trough or peak-to-peak pitch in the range of from about 10 microns to about 250 microns. In one embodiment of an anti-reflective structure 16 with improved durability, the riblets 16 have rounded peaks R_{P} and troughs R_{T} with a radius of about 5 microns, a trough angle ß of about 53 degrees, a peak to peak pitch or distance D_{PP} of about 50 microns, and a trough to peak height H_{TP} of about 37.7307 microns.

It can be desirable for the anti-reflective structures to exhibit a refractive index that is less than about 1.55, and preferably a refractive index that is less than about 1.50. When the anti-reflective structures comprise prism structures (e.g., linear prism structures or riblets), it can be desirable for each of the prisms to narrow from their base to a tip having an apex angle that is less than about 90 degrees, and preferably less than or equal to about 60 degrees. It can be desirable for such a prism structure to have a trough to peak height in the range of from about 10 microns to about 250 microns. It can also be desirable for such a prism structure to have a trough to peak height in the range of from about 25 microns to about 100 microns.

It can be desirable for a transparent anti-reflective structured film of the invention to exhibit at least about 85%, 90%, 91%, 92%, 93%, 94%, 95%, 96%, 97%, 98% or 99% light transmission, after the structured surface is exposed to the dirt pick-up test, the falling sand test, or a combination of both tests. These tests are described below. It can also be desirable for a transparent anti-reflective structured film of the invention to exhibit a change in light transmission of less than 10%, 9%, 8%, 7%, 6%, 5%, 4%, 3%, 2% or 1%, after the structured surface is exposed to the dirt pick-up test, the falling sand test, or a combination of both tests.

A transparent anti-reflective structured film of the invention may also comprise inorganic particles, and preferably nanoparticles in the silicone elastomeric material of the anti-reflective structures. These particles may comprise any suitable inorganic material (e.g., silica, zirconia, titania, etc., or any combination thereof). Such particles may also be coated with a silane surface modification in order to promote dispersion in silicone. Such particles may have a size in the range of up to and including about 2.0 microns. Silica particles can be up to the micron size, but it is preferable for particles made of other materials to be used in the nanometer sizes (i.e., in the range of from about 5 nm up to and including about 50 nm). Such particles, especially nanoparticles, may also be loaded into the silicone elastomeric material in the range of from 0 wt.% up to and including about 60 wt.%.

Referring to FIG. 4, any embodiment of a transparent anti-reflective structured film 10 of the invention can be used in a light energy absorbing device 30 such as, for example, a light source thermal energy absorbing device (e.g., a solar hot water system), a photovoltaic device or any other light energy absorbing device. Such a device 30 also comprises a light absorber 32 (e.g., a photovoltaic cell) having a light energy receiving face 32a, with the transparent anti-reflective structured film 10 being disposed relative to the light absorber 32 so as to be between a source of light energy (e.g., the sun) and the light energy receiving face 32a. In this way, light energy from the source passes through the structured film 10 before being absorbed by the light absorber 32. The film 10 can be bonded, adhered, mechanically fastened or otherwise disposed in direct contact with the light energy receiving face 32a. Alternatively, if desired, one or more of a transparent support backing 24 or other intermediate layers can be disposed between the film 10 and the light absorber 32.

Referring to FIG. 5, by using a transparent anti-reflective structured film 10 of the invention with a light absorber 32 of a light energy absorbing device 30, incident light (represented by arrows 40) striking the surfaces 18 of the anti-reflective structures 16 are likely to be reflected multiple times (represented by arrows 40_{R}). Such multiple reflections of the light 40 increases the probability of light 40 being refracted into the light absorber 32, as well as of increasing the incident light acceptance angles. In this way, the use of such transparent anti-reflective structures can increase the efficiency and energy output of the device 30.

When the light absorbing device is a photovoltaic device, the light absorber is a photovoltaic module having at least one photovoltaic cell for converting solar or other light energy into electrical energy. The anti-reflective structured film reduces surface reflection, which can increase the amount of light impinging on the photovoltaic cell resulting in increased production of electric energy. By using a transparent anti-reflective structured film of the invention in this manner, efficiencies in converting light energy to electrical energy may be improved by at least about 3% and possibly in the range of from about 5% up to and including about 10%. Because the transparent anti-reflective structures are in the form of a film, the photovoltaic cell can be sufficiently flexible and pliant so as to be wound into a roll or folded without being damaged.

A light energy absorbing device of the invention can be made by mechanically attaching, adhesively bonding or otherwise securing the anti-reflective structured film to the light absorber so that light can pass through the anti-reflective structured film to the light receiving face of the light absorber (e.g., photovoltaic cell). The light absorber can be, for example, a solar hot water heater or other light generated thermal energy absorbing device, a photovoltaic cell for converting solar or other light energy into electrical energy or a combination thereof.

A transparent anti-reflective structured film according to the present invention can be made by providing a transparent structured film substrate as described above and then treating the structured surface such that all, most or at least a substantial portion of the cross-linked silicone elastomeric material defining the structured surface is transformed into a glass-like material comprising an SiO₂ stoichiometry. This glass-like surface is then coated with a coating comprising, consisting essentially of, or consisting of at least one layer of agglomerates of silica nanoparticles, with the agglomerates comprising a three-dimensional porous network of silica nanoparticles, and the silica nanoparticles being bonded to adjacent silica nanoparticles.

The anti-reflective structured surface of the initial structured film substrate can be treated to form the glass-like surface, for example, by exposing the anti-reflective structured surface to any suitable treatment such as, for example, at least one or a combination of vacuum-ultraviolet (VUV) light (e.g., by 172 nm Excimer treatment), vacuum-ultraviolet light and ozone (VUVO), oxygen plasma, and heat (e.g., induction heating, a flame, etc.). In order to be suitable for use in a high volume manufacturing setting, such treatments need to be performed relatively quickly. In particular, for example, high speed (i.e., high volume) web-based manufacturing processes would require the use of treatment times as short as, for example, less than or equal to about 5 minutes. At the same time, the surface of the silicone material needs to be treated for a sufficient period of time (e.g., 5 to 300 seconds of 172 nm Excimer lamp exposure) and at a suitable energy level (e.g., 10 to 50 mW/cm² in a nitrogen inert atmosphere of less than 50 ppm oxygen) to produce the desired level of conversion from silicon to the SiO₂ stoichiometry. Depending on the settings (e.g., intensity and/or duration) of the treatment used to produce the glass-like surface, there may be a remaining portion of the structured film substrate that has not converted to the glass-like material. As seen, for example, in FIG. 2, the treatment settings may also be chosen so that all of the cross-linked silicone elastomeric material defining each of the anti-reflective structures is transformed into the glass-like material comprising an SiO₂ stoichiometry. Alternatively, the treatment settings may be chosen so that a core portion of each of the anti-reflective structures remains the silicone elastomeric material (see FIGS. 1, 3 and 4). To save on energy costs, it can be desirable to minimize the depth and degree to which the anti-reflective structured surface is converted into a the glass-like surface.

The transparent structured film substrate can be made by providing a silicone elastomeric precursor material that is curable so as to form the cross-linked silicone elastomeric material. This silicone elastomeric precursor material is formed into the shape of the structured film substrate using any suitable forming technique. For example, appropriately sized-grooves can be formed in a substrate and then the substrate used as a mold surface on which the silicone elastomeric precursor material is coated so as to cast the major structured face with anti-reflective structures of the structured film substrate. Such a mold substrate can be made, for example, in accordance with the techniques and equipment disclosed in U.S. Patent Publication No. US 2006/0234605, which is incorporated herein by reference in its entirety. While in this shape, the silicone elastomeric precursor material is cured so as to form the structured film substrate. Alternatively, the tool disclosed in U.S. Patent Publication No. US 2006/0234605 can be used to cast the appropriately sized-grooves in a polymeric mold substrate (e.g., in the form of a film) that is then used as the mold surface. Depending on the silicone elastomeric precursor material used, the curing process can involve subjecting the precursor material to a cross-linking treatment (e.g., a thermal and/or radiation treatment). When the precursor material is a two-part self curing silicone elastomeric material, the curing process can involve maintaining the precursor material in contact with the mold surface for a long enough period, after the two parts are mixed, to allow cross-linking to occur.

The step of coating the glass-like surface with at least one layer of agglomerates of silica nanoparticles can be performed in accordance with the techniques disclosed in, for example, the previously incorporated PCT Publication No. WO2009/140482, Published US Patent Application No. US2001/036547, and US Patents Nos. US 3,986,997 and US 4,027,073, as well as PCT Application No. US2010/056773, US Provisional Patent Applications Nos. 61/390491 filed October 6, 2010 and 61/262423 filed November 18, 2009. In order to obtain good wetting of the silica nanoparticle coating, it can be desirable for the glass-like surface to exhibit hydrophilic properties. It may also be desirable to apply heat to the silica nanoparticle coating (e.g., with a flame, induction heat, etc.) so as to induce the nanoparticles to sinter together. It may be desirable to limit such a sintering step , otherwise excessive flattening of the silica nanoparticle agglomerates may result. While various coating techniques may be employed to apply the one or more layers of agglomerates of silica nanoparticles, it has been found desirable to use conventional air-knife coating techniques to apply such a coating. Such air-knife coating processes help to insure a relatively thin coating of the silica nanoparticle agglomerates onto the glass-like anti-reflective structured surface.

The following Examples have been selected merely to further illustrate features, advantages, and/or other details of the invention. It is to be expressly understood, however, that while the Examples serve this purpose, the particular ingredients and amounts used as well as other conditions and details are not to be construed in a manner that would unduly limit the scope of this invention.

### EXAMPLES

### Example 1

RTV615 Part A and RTV615 Part B available from Momentive Performance Materials of Waterford, New York, were mixed at a 10:1 ratio and coated 100 microns thick onto each of four quartz glass slides. The silicone coated quartz glass slides were subsequently heated to 85°C for 30 minutes in a convection oven to cross-link/cure the thermally curable silicone elastomeric precursor material. These glass slides coated with cross-linked silicone (Samples 2-5) were then exposed to flame treatment as shown in Table 1. These flame treated silicone coated glass constructions were then analyzed by nano-indentation for Storage Modulus. Modulus changes in these flame treated silicone coated glass constructions are shown in Table 1.

**Table 1**

| **Flame Treated RTV615 Silicone** | | | |
|---|---|---|---|
| | | | Nano-indenter |
| | **Flame Conditions** | | **Storage Modulus** |
| **Sample** | **Temperature (°C)** | **Time (Seconds)** | **MegaPascals** |
| 1 | 0 | 0 | 12.3 |
| 2 | 2000 | 30 | 9.7 |
| 3 | 2000 | 30 | 8.6 |
| 4 | 2000 | 60 | 22.7 |
| 5 | 2000 | 60 | 19.5 |

### Example 2

Fourteen 7.6 cm (3 inch) by 5.1 cm (2 inch) glass slides (available from VWR International, LLC.) were primed with a nano-silica based primer. The nano-silica primer consists of a 5 % by weight blend of a 70:30 ratio of a first colloidal silica ("NALCO 1115 COLLOIDAL SILICA") and a second colloidal silica.("NALCO 1050 colloidal SILICA) in H₂O brought to a pH of 2.5-2.0 with HNO₃. A thin (about 100 nanometers) even coating of the primer was applied to each glass slide by wiping the surface with a small wipe (obtained under the trade designation "KIMTECH" from Kimberly-Clark, Roswell, GA) dampened with the nano-silica primer solution. The primer was allowed to dry at room temperature. An addition cure silicone (Sylgard 184, available from Dow Corning, Midland, MI) was mixed at a ratio of 10:1 (part A to Part B) and was applied to the surface of the primed glass slides in a smooth coating at a thickness of 45 micrometers and allowed to fully cure over 48 hours. For Samples 6 and 7, the surface of the silicone was not treated, while Samples 8 through 19 were oxygen plasma treated using a commercial batch plasma system (Plasmatherm Model 3032) configured for reactive ion etching (RIE) with a 27-inch lower powered electrode and central gas pumping. The chamber is pumped by a roots blower (Edwards Model EH1200) backed by a dry mechanical pump (Edwards Model iQDP80). RF power is delivered by a 3 kW, 13.56 Mhz solid-state generator (RFPP Model RF30H) through an impedance matching network. The system has a nominal base pressure of 5 mTorr. The flow rates of the gases are controlled by MKS flow controllers. Substrates for plasma treatment are placed on the lower powered electrode. The silicone coated glass slides were placed on the powered electrode of the batch plasma apparatus. The plasma treatment was performed with an oxygen plasma by flowing oxygen gas (Oxygen Service Corporation, UHP Grade) at a flow rate of 500 standard cm3/min and plasma power of 3000 watts for 90 seconds. After the plasma treatment was completed, the chamber was vented to atmosphere and the samples removed.

Samples 6 through 17, along with one uncoated plain glass slide, were periodically subjected to the dirt pick-up test #1 described below, with the initial light transmission (Ti) before being tested, the final light transmission (Tf) after being tested, and the difference between the initial and final light transmissions (Td) being tabulated for each in the below Table 2 (Dirt Pick-up Test #1 Results). Transmission was tested using a Hazemeter. The tabulated data shows a significant increase in light transmission for the oxygen plasma treated Samples 8 through 17 compared to untreated Samples 6 and 7. This difference in light transmission is caused by the additionally treated silicone elastomer surface (Samples 8 through 17) picking up and holding onto less dirt than the untreated Samples 6 and 7. The Table 2 data also shows that the treated Samples 6 through 17 exhibited light transparency comparable to that of the plain glass slides.

**Table 2 (Dirt Pick-up Test #1 Results)**

| **Sample** | **Time after 02 Plasma (hr)** | **Tᵢ** | **T_{f}** | **T_{d}** |
|---|---|---|---|---|
| 6 | No Plasma Treatment | 95.4 | 56.9 | -38.5 |
| 7 | No Plasma Treatment | 95.2 | 62.1 | -33.1 |
| 8 | 1 | 95.3 | 94.5 | -0.8 |
| 9 | 1 | 95.2 | 94.4 | -0.8 |
| 10 | 8 | 95.5 | 94.4 | -1.1 |
| 11 | 8 | 95.6 | 94.4 | -1.2 |
| 12 | 32 | 95.6 | 95 | -0.6 |
| 13 | 32 | 95.6 | 95.1 | -0.5 |
| 14 | 197 | 95.9 | 94.6 | -1.3 |
| 15 | 197 | 95.5 | 93.9 | -1.6 |
| 16 | 1131 | 95.7 | 95.4 | -0.3 |
| 17 | 1131 | 95.8 | 95.1 | -0.7 |
| Plain Glass Slide | | 94.5 | 94.3 | -0.2 |

Samples 18 and 19 were subjected to the falling sand test described below, with the initial light transmission (Ti) before being tested, the final light transmission (Tf) after being tested, and the difference between the initial and final light transmissions (Td) being tabulated in the below Table 3 (Falling Sand Test). The tabulated data shows that the treated Samples 18 and 19 exhibited light transparency comparable to that of the plain glass slides.

**Table 3 (Falling Sand Test Results)**

| **Sample** | **Time after O2 Plasma (hr)** | **Tᵢ** | **T_{f}** | **T_{d}** |
|---|---|---|---|---|
| 18 | 1131 | 95.8 | 93.2 | -2.6 |
| 19 | 1131 | 95.7 | 93.3 | -2.4 |
| Plain Glass Slide | | 94.7 | 92.2 | -2.5 |

Samples 18 and 19 were also subjected to the dirt test immediately following the falling sand test with initial transmission (Ti) representing the transmission value after the falling sand test, final transmission (Tf) representing the transmission value after the dirt test and the difference between the initial and final transmission (Td) being tabulated in the below Table 4 (Dirt Test #1 Results Immediately Following Falling Sand Test). The tabulated data shows that the oxygen plasma treated silicone samples are within 2% of the performance of the plain glass slide.

**Table 4 (Dirt Test #1 Results Immediately Following Falling Sand Test)**

| **Sample** | **Tᵢ** | **T_{f}** | **T_{d}** |
|---|---|---|---|
| 18 | 93.2 | 91.7 | -1.5 |
| 19 | 93.3 | 91.9 | -1.4 |
| Glass Slide | 92.2 | 92.3 | 0.1 |

### Example 3

Two 30.5 cm (12 inch) by 15.2 cm (6 inch) sheets of polyethylene terephthalate (PET) (obtained under the trade designation "MELINEX 618" from DuPont Teijin Films, Chester, VA) were primed with a nano-silica based primer. The nano-silica primer consists of a 5 % by weight blend of a 70:30 ratio of a first colloidal silica ("NALCO 1115 COLLOIDAL SILICA") and a second colloidal silica ("NALCO 1050 colloidal SILICA) in H₂O brought to a pH of 2.5-2.0 with HNO₃. A thin (about 100 nanometers) even coating of the primer was applied to each glass slide by wiping the surface with a small wipe (obtained under the trade designation "KIMTECH" from Kimberly-Clark, Roswell, GA) dampened with the nano-silica primer solution. The primer was allowed to dry at room temperature. A silanol terminated polydimethylsiloxane fluid (DMS-S51, available from Gelest Inc., Morrisville, PA) was coated on to the primed PET film at a thickness of 100 micrometers using a notch bar coater. The PET film with silicone coating was taped to a carrier web and passed through an electron beam at an acceleration voltage of 190 keV and a dose of 10 MRads. The E-beam unit was a broadband curtain type electron beam processor (obtained from PCT Engineered Systems, LLC). Six pieces (Samples 20, 21, 22, 23, 24 and 25) were cut from one of the silicone coated film, Samples 20, 21, 22 and 23 had the surface of the silicone coating exposed to 120 seconds of an 172 nm Excimer Lamp (Model UER20-172, available from Ushio America, Inc., Cypress, CA) at an irradiance of 10 mW/cm² with nitrogen purging. Samples 24 and 25 did not receive an Excimer Lamp treatment. Six pieces (Samples 26, 27, 28, 29, 30 and 31) were cut from the other silicone coated film which received an extra e-beam dose of four passes at 120 keV and a dose of 15 MRad/pass to further cross-link the surface. Samples 26, 27, 28 and 29 were then exposed 120 seconds of an 172 nm Excimer Lamp at an irradiance of 10 mW/cm². Samples 30 and 31 did not receive an Excimer Lamp treatment.

Samples 20, 21, 24, 26, 27 and 30 were subjected to the dirt pick-up test #1 described below, with the initial light transmission (Ti) before being tested, the final light transmission (Tf) after being tested, and the difference between the initial and final light transmissions (Td) being tabulated for each in the below Table 5 (Dirt Pick-up Test #1 Results). The tabulated data shows a significant increase in light transmission for the additionally treated Samples 20, 21, 26 and 27 compared to the untreated Samples 24 and 30. This difference in light transmission is caused by the additionally treated silicone elastomer surface (Samples 20, 21, 26 and 27) picking up and holding onto less dirt than the untreated Samples 24 and 30. The Table 5 data also shows that the treated Samples 20, 21, 26 and 27 exhibited light transparency comparable to that of the plain glass slide from Table 5. The table also shows that the extra electron beam cross linking in Sample 30 results in less loss of transmission even without the 172 nm Excimer lamp treatment compared to Sample 24 which received neither electron beam nor 172 nm Excimer lamp treatment.

**Table 5 (Dirt Test #1 Results)**

| **Sample** | **Tᵢ** | **T_{f}** | **T_{d}** |
|---|---|---|---|
| 20 | 95.9 | 95.2 | -0.7 |
| 21 | 95.6 | 95.2 | -0.4 |
| 24 | 96.5 | 55.5 | -41 |
| 26 | 96 | 94.5 | -1.5 |
| 27 | 95.9 | 93.3 | -2.6 |
| 30 | 96.3 | 82.6 | -13.7 |

Samples 22, 23, 25, 28, 29 and 31 were subjected to the falling sand test described below, with the initial light transmission (Ti) before being tested, the final light transmission (Tf) after being tested, and the difference between the initial and final light transmissions (Td) being tabulated in the below Table 6 (Falling Sand Test). The tabulated data shows an increase in light transmission (i.e., Falling Sand Test results) for the Samples 28 and 29 that were additionally electron beam cross-linked before the 172 nm Excimer lamp treatment compared to Samples 22 and 23 that were not additionally electron beam cross-linked. The table also shows that extra electron beam cross linking without 172 nm Excimer lamp treatment in Sample 31 results in less loss of transmission compared to Sample 25 which did not receive either extra electron beam cross linking or 172 nm Excimer lamp treatment as well as Samples 22 and 23 which received 172 nm Excimer lamp treatment only and Samples 28 and 29 which received both extra electron beam cross liking and 172 nm Excimer lamp treatment..

**Table 6 (Falling Sand Test Results)**

| **Sample** | **Tᵢ** | **T_{f}** | **T_{d}** |
|---|---|---|---|
| 22 | 96 | 84.5 | -11.5 |
| 23 | 95.8 | 88 | -7.8 |
| 25 | 96.2 | 92.5 | -3.7 |
| 28 | 95.9 | 89.6 | -6.3 |
| 29 | 95.9 | 90.2 | -5.7 |
| 31 | 96.4 | 95.2 | -1.2 |

### Example 4

Two 30.5 cm (12 inch) by 15.2 cm (6 inch) sheets of polyethylene terephthalate (PET) (obtained under the trade designation "MELINEX 618" from DuPont Teijin Films, Chester, VA) were primed with a nano-silica based primer. The nano-silica primer consists of a 5 % by weight blend of a 70:30 ratio of a first colloidal silica ("NALCO 1115 COLLOIDAL SILICA") and a second colloidal silica ("NALCO 1050 colloidal SILICA) in H₂O, brought to a pH of 2.5-2.0 with HNO₃. A thin (about 100 nanometers) even coating of the primer was applied to each glass slide by wiping the surface with a small wipe (obtained under the trade designation "KIMTECH" from Kimberly-Clark, Roswell, GA) dampened with the nano-silica primer solution. The primer was allowed to dry at room temperature. A thermal cure silicone elastomer (Sylgard 184, available from Dow Corning, Midland, MI) was coated between the primed PET and a polypropylene tooling film comprising anti-reflection surface structure. The PET film with silicone coating and polypropylene tooling film were placed in an oven at 75° C for an 90 minutes to cure the silicone coating. After removing the films from then oven the tooling film was removed resulting in a surface structured anti-reflection silicone coating attached to the PET film. In order to provide extra cross-linking for improved durability at the surface of the silicone surface structures, one sheet of the coated film was then taped to a carrier web and passed through an electron beam at an acceleration voltage of 120 keV and 15 MRads/pass for four passes. The E-beam unit was a broadband curtain type electron beam processor (obtained from PCT Engineered Systems, LLC).

Four pieces (Samples 32, 33, 34, and 35) were cut from the silicone coated film that did not receive the extra electron beam treatment, Samples 32 and 33 had the surface of the silicone coating exposed to 300 seconds of an 172 nm Excimer Lamp (Ushio Model UER20-172) at an irradiance of approximately 10 mW/cm² with nitrogen purging. Samples 34 and 35 did not receive an Excimer Lamp treatment. Four pieces (Samples 36, 37, 38 and 39) were cut from the other silicone coated film which received an extra e-beam treatment. Samples 37 and 37 were then exposed 300 seconds of an 172 nm Excimer Lamp at an irradiance of approximately 10 mW/cm². Samples 38 and 39 did not receive an Excimer Lamp treatment.

Samples 32, 34, 36 and 38 were subjected to the dirt pick-up test #1 described below, with the initial light transmission (Ti) before being tested, the final light transmission (Tf) after being tested, and the difference between the initial and final light transmissions (Td) being tabulated for each in the below Table 7 (Dirt Pick-up Test #1 Results). The tabulated data shows a significant increase in light transmission for the 172 nm Excimer lamp treated Samples 32 and 36 compared to the untreated Samples 34 and 38. This difference in light transmission is caused by the 172 nm Excimer lamp treated silicone elastomer surface (Samples 32 and 36) picking up and holding onto less dirt than the untreated Samples 34 and 38. The Table 7 data also shows that Sample 36 which received additional electron beam cross linking before the 172 nm Excimer lamp treatment produces better dirt pick-up test results than Sample 32 which received only the 172 nm Excimer lamp treatment.

**Table 7 (Dirt Pickup Test #1 Results)**

| **Sample** | **Tᵢ** | **T_{f}** | **T_{d}** |
|---|---|---|---|
| 32 | 101 | 97.6 | -3.4 |
| 34 | 101 | 73.2 | -27.8 |
| 36 | 101 | 99.3 | -1.7 |
| 38 | 101 | 93.6 | -7.4 |

Samples 33, 35, 37 and 39 were subjected to the falling sand test described below, with the initial light transmission (Ti) before being tested, the final light transmission (Tf) after being tested, and the difference between the initial and final light transmissions (Td) being tabulated in the below Table 8 (Falling Sand Test). The tabulated data shows an increase in light transmission (i.e., Falling Sand Test results) for the Samples 33 and 37 that received the 172 nm Excimer lamp treatment compared to Samples 35 and 39 that were not treated with the 172 nm Excimer lamp. An increase is also seen in light transmission (i.e., Falling Sand Test results) for the Samples 37 and 39 that were additionally electron beam cross-linked before the 172 nm Excimer lamp treatment compared to Samples 33 and 35 that were not additionally electron beam cross-linked.

**Table 8 (Falling Sand Test Results)**

| **Sample** | **Tᵢ** | **T_{f}** | **T_{d}** |
|---|---|---|---|
| 33 | 101 | 95.7 | -5.3 |
| 35 | 101 | 90.4 | -10.6 |
| 37 | 101 | 96.4 | -4.6 |
| 39 | 101 | 94.4 | -6.6 |

Samples 33, 35, 37 and 39 were also subjected to the dirt test #1 immediately following the falling sand test with initial transmission (Ti) representing the transmission value after the falling sand test, final transmission (Tf) representing the transmission value after the dirt test and the difference between the initial and final transmission (Td) being tabulated in the below Table 9 (Dirt Test #1 Results Immediately Following Falling Sand Test). The tabulated data shows that Samples 37 and 39, which received the extra electron beam surface treatment, maintained the sample's dirt resistance as seen by less loss of transmission after the dirt test compared to Sample 33 and 35 which did not receive the extra electron beam surface treatment.

**Table 9 (Dirt Test #1 Results Immediately Following Falling Sand Test)**

| **Sample** | **Tᵢ** | **T_{f}** | **T_{d}** |
|---|---|---|---|
| 33 | 95.7 | 86.6 | -9.1 |
| 35 | 90.4 | 70.5 | -19.9 |
| 37 | 96.4 | 94.2 | -2.2 |
| 39 | 94.4 | 91.3 | -3.1 |

### Example 5

Silanol terminated polydimethyl siloxane (PDMS-S51 from Gelest) was coated at a thickness of 25 microns onto a sheet of polyethylene terephthalate (PET) (obtained under the trade designation "MELINEX 618" from DuPont Teijin Films, Chester, VA) that was primed with SS4120 (available from Mometive Performance Materials, Waterford, NY). The PET film with silicone coating was taped to a carrier web and passed through an electron beam at an acceleration voltage of 160 keV and a dose of 12 MRads. The E-beam unit was a broadband curtain type electron beam processor (obtained from PCT Engineered Systems, LLC). The silicone coated PET film was then cut into six pieces. Two of these silicone coated PET pieces (Samples 41 and 44) were floated on a thin film of water on top of 6.4 mm thick plate of aluminum and then exposed to a flame treatment by exposing the coated surface to an approximately 2000 °C flame for 20 seconds. Another two of the silicone coated PET pieces (Samples 42 and 45) were exposed to an additional electron beam treatment of 5 passes, at 140 kV and 12 Mrad/pass, to further cross link the surface of the silicone, and then were floated on a thin film of water on top of 6.4 mm thick plate of aluminum and exposed to an approximately 2000 °C flame for 20 seconds. The last silicone coated PET piece (Sample 40 and 43) was not additionally treated.

Samples 41 and 42 were subjected to the Dirt Pick-Up Test #2 described below, with the initial light transmission (Ti) before being tested, the final light transmission (Tf) after being tested, and the difference between the initial and final light transmissions (Td) being tabulated for each in the below Table 10 (Dirt Pick-up Test #2 Results). The tabulated data shows a significant increase in light transmission for the additionally treated Samples 41 and 42 compared to the untreated Sample 40. This difference in light transmission is caused by the additionally treated silicone elastomer surface (Samples 41 and 42) picking up and holding onto less dirt than the untreated Sample 40. The Table 10 data also shows that additional cross linking before the flame treatment (i.e., Sample 42) produces better Dirt PickUp Test results.

**Table 10 (Dirt Pick-up Test #2 Results)**

| **Sample** | **Tᵢ** | **T_{f}** | **T_{d}** |
|---|---|---|---|
| 40 | 95.4 | 87.3 | -8.1 |
| 41 | 95.2 | 92.5 | -2.7 |
| 42 | 95.1 | 93 | -2.1 |

Samples 43, 44 and 45 were subjected to the falling sand test described below, with the initial light transmission (Ti) before being tested, the final light transmission (Tf) after being tested, and the difference between the initial and final light transmissions (Td) being tabulated in the below Table 11 (Falling Sand Test). The tabulated data shows a significant increase in light transmission for the additionally treated Sample 45 compared to the untreated Sample 43. This difference in light transmission is caused by the additionally treated silicone elastomeric surface (Sample 45) picking up and holding onto less dirt than the untreated Sample 43. The tabulated data also shows an increase in light transmission (i.e., Falling Sand Test results) for the Sample 45 that was additionally cross-linked before the flame treatment compared to Sample 44 that was not additionally cross-linked.

**Table 11 (Falling Sand Test Results)**

| **Sample** | **Tᵢ** | **T_{f}** | **T_{d}** |
|---|---|---|---|
| 43 | 96.5 | 92.4 | -4.1 |
| 44 | 96.2 | 91.5 | -4.7 |
| 45 | 95.2 | 92.1 | -3.1 |

### TEST METHODS

### Dirt Pick-up Test #1

Coating soil resistance is tested using an apparatus constructed from a 95 mm square plastic petri-dish (trade name Falcon 35112; available from Becton Dickinson Labware) with a 5 cm hole drilled through bottom half of a petri-dish. A 5 cm by 8 cm coated sample is attached with adhesive tape on the outside of the petri-dish covering the 5 cm hole so that the coated surface of the sample is facing the inside of the petri dish and will be exposed directly to the test dirt. 50 g of Arizona Test Dirt (0-600 micrometer distribution; available from Powder Technology, Inc., Burnsville, MN) is placed into the bottom half of the petri dish covering the coated samples. The two halves of the petri dish are combined securely and shaken lightly in side-to-side cycles so that the dirt tumbles back and forth over the surface of the sample. The sample is shaken for 60 cycles at a rate of 1 cycle per second. The sample is then removed from the testing apparatus and gently tapped to remove and loosely attached dirt. The transmittance of the coated sample is measured before and after the dirt test using a Haze Gard Plus available from BYK-Gardner.

### Dirt Pick-up Test #2

As used herein, this dirt pick-up test involves tumbling a sample of the transparent anti-reflective structured film inside a 1 gallon Nalgen jar with 100 grams of fine/dusty Arizona dirt. A 1.5"x2.5" sample is attached to a larger 3"x5" piece of 10 mil PET. The sample and dirt tumble due to baffles on the inside of the Nalgen jar, which is laid horizontally on motorized rollers. After two minutes of tumbling the sample is blown off with canned air to remove excess dirt so that only dirt that is bound to the surface remains. The transmittance of the coated sample is measured before and after the dirt test using a Haze Gard Plus available from BYK-Gardner.

### Falling Sand Test

Coating abrasion resistance is tested using a Falling Sand Abrasion Tester (trade name HP-1160) available from Humboldt MFG. Co. A 5 cm by 8 cm coated sample is attached with adhesive tape to the testing platform centered underneath the outlet of the falling sand tube. 1000 g of ASTM C778 silica sand, available from U.S. Silica Company, is loaded into the hoper that feeds the falling sand tube. The gate is opened and the sand begins to fall a distance of 100 cm through the falling sand tube and impinges on the surface of the coated sample. Water is run over the abraded surface for 5 seconds and then the surface is lightly wiped using a damp KimWipe (Kimberly-Clark). The sample is then lightly wiped with a dry KimWipe to dry the sample. The transmittance of the coated samples is measured before and after the falling sand test using a Haze Gard Plus available from BYK-Gardner.

### Exemplary Embodiments of the Present Invention

### Anti-Reflective Film Embodiment 1

A transparent anti-reflective structured film, sheet, web or the like comprising:
a structured film substrate having a major structured face and a major backing face, with the structured face comprising anti-reflective structures defining a structured surface and being anti-reflective to light, at least a substantial portion, most, or all of the structured surface comprising a glass-like surface, at least the anti-reflective structures comprising a cross-linked silicone elastomeric material, and the glass-like surface comprising an SiO₂ stoichiometry.

### Film Embodiment 2

The film according to film embodiment 1, wherein the glass-like surface comprises the SiO₂ stoichiometry to a depth of at least about 1, 5, 10, 15, 20, 25, 30, 35, 40, 45, 50, 55, 60, 65, 70, 75, 80, 85, 90, 95, or 100 nanometers or even deeper into each of the anti-reflective structures.

### Film Embodiment 3

The film according to film embodiment 1, wherein the glass-like surface comprises SiO₂ stoichiometry to a depth of up to about 100, 110, 120, 130, 140, or 150 nanometers or even deeper (e.g., as deep as 1, 2, 3, 4 or 5 microns) into each of the anti-reflective structures.

### Film Embodiment 4

The film according to any one of film embodiments 1 to 3, wherein the glass-like surface comprises a minimum amount of at least about 10 molar % carbon atoms or at least about 20 molar % carbon atoms, up to about 40 molar % carbon atoms. It is believed that the relatively high amount of carbon atoms in the glass-like surface is indicative of the relatively short periods of time used in treating the silicone material to produce the SiO₂ stoichiometry according to the present invention.

### Film Embodiment 5

The film according to any one of film embodiments 1 to 4, wherein the anti-reflective structures comprise at least one or a combination of prismatic, pyramidal, conical, parabolic, hemispherical, cylindrical, and columnar structures.

### Film Embodiment 6

The film according to any one of film embodiments 1 to 5, wherein the anti-reflective structures comprise prisms having a prism tip angle of less than about 90 degrees, less than or equal to about 60 degrees; or in the range of from about 10 degrees up to about 90 degrees and a pitch in the range of from about 2 microns to about 2 cm.

### Film Embodiment 7

The film according to any one of film embodiments 1 to 6, wherein the anti-reflective structures comprise prisms having a prism tip angle in the range of from about 15 degrees to about 75 degrees and a pitch in the range of from about 10 microns to about 250 microns.

### Film Embodiment 8

The film according to any one of film embodiments 1 to 7, wherein the anti-reflective structures comprise prisms having a trough to peak height in the range of from about 10 microns to about 250 microns.

### Film Embodiment 9

The film according to any one of film embodiments 1 to 8, wherein the film exhibits at least about 80%, 81%, 82%, 83%, 84%, 85%, 90%, 91%, 92%, 93%, 94%, 95%, 96%, 97%, 98% or 99% light transmission, after the structured surface is exposed to the Dirt Pick-Up Test, the Falling Sand Test, or both tests.

### Film Embodiment 10

The film according to any one of film embodiments 1 to 9, wherein the film exhibits a change in light transmission of less than 10%, 9%, 8%, 7%, 6%, 5%, 4%, 3%, 2% or 1%, after the structured surface is exposed to the Dirt Pick-Up Test, the Falling Sand Test, or both tests.

### Film Embodiment 11

The film according to any one of film embodiments 1 to 10, wherein the structured surface exhibits a storage modulus of at least about 20 MPa, and the remainder of each anti-reflective structure exhibits a lower storage modulus than that exhibited by the structured surface.

### Film Embodiment 12

The film according to any one of film embodiments 1 to 11 further comprising inorganic nanoparticles (e.g., of silica, zirconia, titania, etc.) in the cross-linked silicone elastomeric material of at least the anti-reflective structures. Such particles may have a size in the range of up to and including about 2.0 microns. Silica particles can be up to the micron size, but it is preferable for particles made of other materials to be used in the nanometer sizes (i.e., in the range of from about 5 nm up to and including about 50 nm). Such particles, especially nanoparticles, may also be loaded into the silicone elastomeric material in the range of from about 0 wt.% up to and including about 60 wt.%.

### Film Embodiment 13

The film according to any one of film embodiments 1 to 12, wherein the structured film substrate further comprises a base portion from which the anti-reflective structures extend. When the base portion and anti-reflective structures are both made of silicone elastomeric material, each of the anti-reflective structures can have about the same silicone elastomer cross-link density and the base portion can have a lower silicone elastomer cross-link density than that of each of the anti-reflective structures.

### Film Embodiment 14

The film according to any one of film embodiments 1 to 13 in combination with a transparent support backing having a major face, wherein the structured film substrate further comprises a backing face (e.g., a major backing face) bonded to the major face of the support backing so as to form a reinforced anti-reflective structured film. The anti-reflective structures can form an exposed surface of the reinforced anti-reflective structured film.

### Film Embodiment 15

The film according to film embodiment 14, wherein the transparent support backing dissipates static electricity.

### Film Embodiment 16

The film according to any one of film embodiments 1 to 15 in combination with a barrier layer, wherein the structured film substrate further comprises a backing face (e.g., a major backing face), and the barrier layer is bonded to the backing face of the structured film substrate.

### Film Embodiment 17

The film according to film embodiment 16, wherein the barrier layer is a moisture barrier.

### Film Embodiment 18

The film according to any one of film embodiments 1 to 17, wherein each of the anti-reflective structures exhibits a silicone elastomer cross-link density gradient, with a silicone elastomer cross-link density that is higher closer to the glass-like surface and lower further away from the glass-like surface.

### Film Embodiment 19

The film according to any one of film embodiments 1 to 18, wherein each of the anti-reflective structures has a core portion and a remainder portion in addition to its glass-like surface, with the cross-linked silicone elastomeric material forming the core portion having a cross-link density that is lower than the cross-linked silicone elastomeric material forming the remainder portion. The cross-linked silicone elastomeric material forming the core portion can have a substantially uniform cross-link density that is lower than the cross-linked silicone elastomeric material forming the remainder portion

### Film Embodiment 20

The film according to any one of film embodiments 1 to 19, wherein the coating has a dry thickness in the range of from about 50 Å to about 10,000 A. It can be desirable for this coating to have a thickness in the range of from about 50 Å to about 2500 A.

### Film Embodiment 21

The film according to any one of the film embodiments 1 to 20, wherein the silica nanoparticles have an average particle diameter of about 40 nanometers or less. The silica nanoparticles can also be spherical.

### Film Embodiment 22

The film according to any one of film embodiments 1 to 21, wherein the coating comprises:
a) from about 60 wt.% (i.e., percent by weight) to about 95 wt.% of the agglomerates of silica nanoparticles;
b) from about 0.1 wt.% to about 20 wt.% of at least one or more tetraalkoxysilanes;
c) optionally from about 0 wt.% to about 5 wt.% of a surfactant; and
d) optionally from about 0 wt.% to about 5 wt.% of a wetting agent.

### Film Embodiment 23

The film according to any one of film embodiments 1 to 20, wherein the coating comprises:
a) from about 0.5wt.% to about 99 wt.% water;
b) from about 0.1 wt.% to about 20 wt.% of the silica nanoparticles having an average particle diameter of 40 nm or less;
c) optionally from about 0 wt.% to about 20 wt.% of the silica nanoparticles having an average particle diameter of greater than about 50 nm, wherein the sum of b) and c) is from about 0.1 wt.% to about 20 wt.%;
d) a sufficient amount of an acid having a pKa of < 3.5 to reduce the pH to less than 5; and
e) optionally from about 0 wt% to about 20 wt. % of a tetraalkoxysilane, relative to the amount of the silica nanoparticles.

### Light Energy Absorbing Device Embodiment 1

A light energy absorbing device comprising: a light absorber having a light energy receiving face; and a transparent anti-reflective structured film, according to any one of film embodiments 1 to 23, disposed so as to be between a source of light energy and the light energy receiving face, while light energy from the source is being absorbed by the light absorber. A light energy absorbing device can include but is not limited to, for example, a thermal energy absorbing device for absorbing thermal energy from a light source (e.g., the sun), a photovoltaic device that converts light into electrical energy, or any other light energy absorbing device.

### Device Embodiment 2

The device according to device embodiment 1, wherein the light absorbing device is a photovoltaic device, the light absorber comprises a photovoltaic module having at least one photovoltaic cell, and the anti-reflective structured film reduces surface reflections so as to improve the electrical power output of the photovoltaic module (i.e., to improve the efficiency of the photovoltaic module in converting light energy into electrical energy) by at least about 3%. It is desirable for the electrical power output of the photovoltaic module to be improved by at least about 5% and preferably in the range of from about 5% to about 10%, or even more.

### Device Embodiment 3

The device according to device embodiment 1 or 2, wherein the light absorber comprises a photovoltaic cell, and the light absorbing device is a photovoltaic device that is flexible and pliant enough to be wound into a roll or folded without being damaged.

### Device Embodiment 4

The device according to device embodiment 1 or 2, wherein the light absorbing device includes a rigid photovoltaic module.

### Device Embodiment 5

The device according to device embodiment 1, wherein the light absorbing device includes a solar thermal panel.

### Device Embodiment 6

The device according to any one of the device embodiments 1,2, 4 and 5, wherein the structured film substrate is laminated to, is a coating on, or is otherwise disposed over a glass substrate.

### Embodiment 1 of a Method of Making a Transparent Anti-reflective Film

A method of making a transparent anti-reflective structured film, the method comprising: providing a transparent structured film substrate having a major structured face and a major backing face, with the structured face comprising anti-reflective structures defining an anti-reflective structured surface that is anti-reflective to light, and at least the anti-reflective structures comprising a cross-linked silicone elastomeric material; and treating all, most or at least a substantial portion of the anti-reflective structured surface so as to transform cross-linked silicone elastomeric material at the anti-reflective structured surface into a glass-like material comprising an SiO₂ stoichiometry, such that all, most, or at least a substantial portion of the anti-reflective structured surface comprises a glass-like surface having the SiO₂ stoichiometry; and coating the glass-like surface with a coating of at least one layer of agglomerates of silica nanoparticles, with the agglomerates comprising a three-dimensional porous network of silica nanoparticles, and the silica nanoparticles being bonded to adjacent silica nanoparticles.

### Embodiment 2 of a Method of Making a Film

The method according to the film making method embodiment 1, wherein the treating comprises exposing the anti-reflective structured surface to at least one or a combination of vacuum-ultraviolet (VUV) light (e.g., by 172 nm Excimer treatment), vacuum-ultraviolet light and ozone (VUVO), oxygen plasma, and heat (e.g., induction heating, a flame, etc.).

The surface of the silicone material needs to be treated for a sufficient period of time (e.g., 5 to 300 seconds of 172 nm Excimer lamp exposure) and at a suitable energy level (e.g., 10-50 mW/cm² in a nitrogen inert atmosphere of less than 50 ppm oxygen) to produce the desired level of conversion from silicon to the SiO₂ stoichiometry.

### Embodiment 3 of a Method of Making a Film

The method according to the film making method embodiment 1 or 2 further comprising:
exposing the anti-reflective structured surface to e-beam radiation so as to cause further cross-linking of the cross-linked silicone elastomeric material of at least the structured surface, the e-beam radiation exposure being performed before the treating.

### Embodiment 4 of a Method of Making a Film

The method according to any one of the film making method embodiments 1 to 3, wherein the step of providing a transparent structured film substrate comprises:
providing silicone precursor material (e.g., a molten thermoplastic or cross-linkable thermoset silicone elastomer resin) that is curable so as to form the cross-linked silicone elastomeric material;
forming the silicone precursor material into the shape of the structured film substrate; and
curing the silicone precursor material so as to form the transparent structured film substrate.

### Embodiment 1 of Method of Making a Light Energy Absorbing Device

A method of making a light energy absorbing device such as, for example, a light source (e.g., solar) thermal energy absorbing device, a photovoltaic device or any other light energy absorbing device, the method comprising:
providing a transparent anti-reflective structured film according to any one of embodiments 1 to 23; providing a light absorber (e.g., a solar hot water heater or other thermal energy absorbing device, a photovoltaic module having at least one photovoltaic cell for converting solar or other light energy into electrical energy, etc.) having a light receiving face; and mechanically attaching, adhesively bonding or otherwise securing the anti-reflective structured film in relation to the light absorber so that light can pass through the anti-reflective structured film to the light receiving face of the light absorber.

### Embodiment 2 of a Method of Making a Light Energy Absorbing Device

A method of making a light energy absorbing device such as, for example, a light source (e.g., solar) thermal energy absorbing device, a photovoltaic device or any other light energy absorbing device, the method comprising:
making a transparent anti-reflective structured film according to the method of any one of the methods of making a film embodiments 1 to 4; providing a light absorber (e.g., a solar hot water heater or other thermal energy absorbing device, a photovoltaic module having at least one photovoltaic cell for converting solar or other light energy into electrical energy) having a light energy receiving face; and mechanically attaching, adhesively bonding or otherwise securing the anti-reflective structured film in relation to the light absorber so that light can pass through the anti-reflective structured film to the light energy receiving face of the light absorber.

This invention may take on various modifications and alterations without departing from its scope. Accordingly, this invention is not limited to the above-described but is to be controlled by the limitations set forth in the following claims and any equivalents thereof.

This invention may be suitably practiced in the absence of any element not specifically disclosed herein.

## Claims

1. A transparent anti-reflective structured film (10) comprising:
a structured film substrate (12) having a structured face (14), with said structured face (14) comprising anti-reflective structures (16) defining a structured surface (18) and being anti-reflective to light, at least a substantial portion of said structured surface (18) comprising a glass-like surface, at least said anti-reflective structures (16) comprising a cross-linked silicone elastomeric material, and said glass-like surface comprising an SiO₂ stoichiometry and being coated with a coating of at least one layer of agglomerates of silica nanoparticles, with said agglomerates comprising a three-dimensional porous network of silica nanoparticles, and the silica nanoparticles being bonded to adjacent silica nanoparticles.

2. The film according to claim 1, wherein said glass-like surface comprises said SiO₂ stoichiometry to a depth of at least about 5 nanometers into each of said anti-reflective structures.

3. The film according to claim 1 or 2, wherein said glass-like surface comprises said SiO₂ stoichiometry to a depth in the range of from at least about 10 nanometers to about 100 nanometers into each of said anti-reflective structures.

4. The film according to any one of claims 1 to 3, wherein the anti-reflective structures comprise prisms having a prism tip angle of less than about 90 degrees, less than or equal to about 60 degrees, or in the range of from about 10 degrees up to about 90 degrees and a pitch in the range of from about 2 microns to about 2 cm.

5. The film according to any one of claims 1 to 4, wherein said glass-like surface comprises a minimum amount of at least about 10 molar % carbon atoms.

6. The film according to any one of claims 1 to 4, wherein said glass-like surface comprises in the range of from a minimum amount of at least about 10 molar % carbon atoms up to about 40 molar % carbon atoms.

7. The film according to any one of claims 1 to 6, wherein said anti-reflective structures comprise prisms having a prism tip angle in the range of from about 15 degrees to about 75 degrees and a pitch in the range of from about 10 microns to about 250 microns.

8. The film according to any one of claims 1 to 7, wherein said anti-reflective structures comprise prisms having a trough to peak height in the range of from about 10 microns to about 250 microns.

9. The film according to any one of claims 1 to 8, wherein the film exhibits at least about 80% light transmission, after the structured surface is exposed to the Dirt Pick-Up Test, the Falling Sand Test, or both tests.

10. The film according to any one of claims 1 to 8, wherein said film exhibits a change in light transmission of less than 8%, after said structured surface is exposed to at least one of the Dirt Pick-Up Test and the Falling Sand Test.

11. The film according to any one of claims 1 to 10, wherein the structured surface exhibits a storage modulus of at least about 20 MPa, and the remainder of each anti-reflective structure exhibits a lower storage modulus than that exhibited by the structured surface.

12. The film according to any one of claims 1to 11, wherein the coating comprises:
a) from about 60 wt.% to about 95 wt.% of the agglomerates of silica nanoparticles;
b) from about 0.1 wt.% to about 20 wt.% of at least one or more tetraalkoxysilanes;
c) optionally from about 0 wt.% to about 5 wt.% of a surfactant; and
d) optionally from about 0 wt.% to about 5 wt.% of a wetting agent.

13. The film according to any one of claims 1 to 11, wherein the coating comprises:
a) from about 0.5wt.% to about 99 wt.% water;
b) from about 0.1 wt.% to about 20 wt.% of the silica nanoparticles having an average particle diameter of 40 nm or less;
c) optionally from about 0 wt.% to about 20 wt.% of the silica nanoparticles having an average particle diameter of greater than about 50 nm, wherein the sum of b) and c) is from about 0.1 wt.% to about 20 wt.%;
d) a sufficient amount of an acid having a pKa of < 3.5 to reduce the pH to less than 5; and
e) optionally from about 0 wt% to about 20 wt. % of a tetraalkoxysilane, relative to the amount of the silica nanoparticles.

14. A light energy absorbing device comprising:
a light absorber (32) having a light energy receiving, face (32a); and
a transparent anti-reflective structured film (10), according to any one of claims 1 to 13, disposed so as a transparent anti-reflective structured film, according to any one of claims 1 to 13, disposed so as to be between a source of light energy and said light energy receiving face (32a), while light energy from the source is being absorbed by said light absorber (32).

15. A method of making a transparent anti-reflective structured film, said method comprising:
providing a structured film substrate having a structured face comprising anti-reflective structures defining an anti-reflective structured surface that is anti-reflective to light, with at least the anti-reflective structures comprising a cross-linked silicone elastomeric material; and
treating the anti-reflective structured surface so as to transform cross-linked silicone elastomeric material defining at least a substantial portion of the anti-reflective structured surface into a glass-like material comprising an SiO₂ stoichiometry, such that at least a substantial portion of the anti-reflective structured surface comprises a glass-like surface having the SiO₂ stoichiometry; and
coating the glass-like surface with a coating of at least one layer of agglomerates of silica nanoparticles, with said agglomerates comprising a three-dimensional porous network of silica nanoparticles, and the silica nanoparticles being bonded to adjacent silica nanoparticles.

## Patentansprüche

1. Transparente, anti-reflektierende Strukturfolie (10), die Folgendes umfasst:
ein strukturiertes Foliensubstrat (12) mit einer strukturierten Vorderseite (14), wobei diese strukturierte Vorderseite (14) aus anti-reflektierenden Strukturen (16) besteht, die eine strukturierte Oberfläche (18) definieren und Licht nicht reflektieren; wobei wenigstens ein wesentlicher Anteil der strukturierten Oberfläche (18) aus einer glasartigen Oberfläche besteht, wenigstens die anti-reflektierenden Strukturen (16) aus einem quervernetzten Silikonelastomermaterial bestehen und die glasartige Oberfläche eine SiO₂-Stöchiometrie umfasst und mit einer Beschichtung von mindestens einer Schicht Silica-Nanoteilchen-Agglomerat beschichtet ist, wobei die Agglomerate aus einem dreidimensionalen porösen Silica-Nanoteilchen-Netz bestehen und die Silica-Nanoteilchen mit benachbarten Silica-Nanoteilchen verbunden sind.

2. Folie nach Anspruch 1, wobei die glasartige Oberfläche in jeder der anti-reflektierenden Strukturen über die SiO₂-Stöchiometrie bis in eine Tiefe von mindestens 5 Nanometern verfügt.

3. Folie nach Anspruch 1 oder 2, wobei die glasartige Oberfläche in jeder der anti-reflektierenden Strukturen über die SiO₂-Stöchiometrie bis in eine Tiefe von mindestens 10 bis zu etwa 100 Nanometern verfügt.

4. Folie nach einem der Ansprüche 1 bis 3, wobei die anti-reflektierenden Strukturen Prismen mit einem Prismen-Spitzenwinkel von weniger als etwa 90 Grad, weniger oder gleich 60 Grad oder im Bereich von etwa 10 bis etwa 90 Grad sowie mit einem Abstand in einer Größenordnung von etwa 2 Mikrometer bis etwa 2 cm umfassen.

5. Folie nach einem der Ansprüche 1 bis 4, wobei die glasartige Oberfläche einen Mindestwert von 10 Mol-% Kohlenstoffatome enthält.

6. Folie nach einem der Ansprüche 1 bis 4, wobei die glasartige Oberfläche Kohlenstoffatome in der Größenordnung zwischen mindestens 10 Mol-% bis etwa 40 Mol-% enthält.

7. Folie nach einem der Ansprüche 1 bis 6, wobei die anti-reflektierenden Strukturen Prismen mit einem Prismen-Spitzenwinkel von etwa 15 bis etwa 75 Grad sowie einem Abstand in einer Größenordnung von etwa 10 bis etwa 250 Mikrometer umfassen.

8. Folie nach einem der Ansprüche 1 bis 7, wobei die anti-reflektierenden Strukturen Prismen mit einer Höhe vom Tiefpunkt zur Spitze von etwa 10 bis etwa 250 Mikrometer umfassen.

9. Folie nach einem der Ansprüche 1 bis 8, wobei die Folie mindestens 80 % Lichtdurchlässigkeit aufweist, nachdem die strukturierte Oberfläche dem Schmutzaufnahmetest, dem Sandrieseltest oder beidem unterzogen wurde.

10. Folie nach einem der Ansprüche 1 bis 8, wobei die Folie eine Änderung der Lichtdurchlässigkeit von weniger als 8 % aufweist, nachdem die strukturierte Oberfläche mindestens dem Schmutzaufnahmetest oder dem Sandrieseltest unterzogen wurde.

11. Folie nach einem der Ansprüche 1 bis 10, wobei die strukturierte Oberfläche einen Speichermodul von mindestens 20 MPa aufweist und der Rest der jeweiligen anti-reflektierenden Struktur einen geringeren Speichermodul als den der strukturierten Oberfläche aufweist.

12. Folie nach einem der Ansprüche 1 bis 11, wobei die Beschichtung Folgendes umfasst:
a) zwischen 60 Gew.-% bis 95 Gew.-% der Silica-Nanoteilchen-Agglomerate;
b) zwischen 0,1 Gew.-% und 20 Gew.-% mindestens eines oder mehrerer Tetraalkoxysilane;
c) wahlweise zwischen 0 Gew.-% und etwa 5 Gew.-% eines Tensids; und
d) wahlweise zwischen 0 Gew.-% und etwa 5 Gew.-% eines Benetzungsmittels.

13. Folie nach einem der Ansprüche 1 bis 11, wobei die Beschichtung Folgendes umfasst:
a) zwischen etwa 0,5 Gew.-% und etwa 99 Gew.-% Wasser;
b) zwischen etwa 0,1 Gew.-% und etwa 20 Gew.-% der Silica-Nanoteilchen mit einem durchschnittlichen Teilchendurchmesser von 40 nm oder geringer;
c) wahlweise zwischen etwa 0 Gew.-% und etwa 20 Gew.-% der Silica-Nanoteilchen mit einem durchschnittlichen Teilchendurchmesser von mehr als etwa 50 nm, wobei die Summe aus b) und c) zwischen etwa 0,1 Gew.-% und etwa 20 Gew.-% liegt;
d) eine ausreichende Menge an Säure mit einem pKa von <3,5 zur Verringerung des pH-Werts auf weniger als 5; und
e) wahlweise zwischen etwa 0 Gew.-% und etwa 20 Gew.-% eines Tetraalkoxysilans, entsprechend der Menge an Silica-Nanoteilchen.

14. Lichtenergieabsorbierende Anordnung, die Folgendes umfasst:
einen Lichtabsorber (32) mit einer lichtenergieempfangenden Vorderseite (32a); und
eine transparente, anti-reflektierende strukturierte Folie (10) nach einem der Ansprüche 1 bis 13, die zwischen der Lichtenergiequelle und der lichtenergieempfangenden Vorderseite (32a) angebracht ist, während die Lichtenergie aus der Quelle durch den Lichtabsorber (32) absorbiert wird.

15. Verfahren zur Herstellung einer transparenten, anti-reflektierenden strukturierten Folie, wobei das Verfahren Folgendes umfasst:
Bereitstellen eines strukturierten Foliensubstrats mit einer strukturierten Oberfläche, die anti-reflektierende Strukturen umfasst, die wiederum eine anti-reflektierende strukturierte Oberfläche definieren, wobei mindestens eine der anti-reflektierenden Strukturen aus einem quervernetzten Silikonelastomermaterial besteht; und
Behandeln der anti-reflektierenden strukturierten Oberfläche in der Weise, dass das quervernetzte Silikonelastomermaterial, das zumindest einen wesentlichen Teil der anti-reflektierenden Oberfläche definiert, in ein glasartiges Material mit einer SiO₂-Stöchiometrie umgewandelt wird, sodass mindestens ein wesentlicher Anteil der anti-reflektierenden strukturierten Oberfläche eine glasartige Oberfläche mit der SiO₂-Stöchiometrie umfasst; und
Beschichten der glasartigen Oberfläche mit einer Beschichtung aus mindestens einer Schicht von Silica-Nanoteilchen-Agglomeraten, wobei die Agglomerate aus einem dreidimensionalen porösen Netz von Silica-Nanoteilchen bestehen und die Silica-Nanoteilchen mit benachbarten Silica-Nanoteilchen fest verbunden sind.

## Revendications

1. Film structuré antireflet transparent (10) comprenant :
un substrat de film structuré (12) possédant une face structurée (14), avec ladite face structurée (14) comprenant des structures antireflets (16) définissant une surface structurée (18) et étant antireflet à la lumière, au moins une partie substantielle de ladite surface structurée (18) comprenant une surface de type verre, au moins lesdites structures antireflets (16) comprenant un matériau élastomère de silicone réticulée, et ladite surface de type verre comprenant une stoechiométrie de SiO₂ et étant revêtue d'un revêtement d'au moins une couche d'agglomérats de nanoparticules de silice, avec lesdits agglomérats comprenant un réseau poreux tridimensionnel de nanoparticules de silice, et les nanoparticules de silice étant liées à des nanoparticules de silice adjacentes.

2. Film selon la revendication 1, dans lequel ladite surface de type verre comprend ladite stoechiométrie de SiO₂ à une profondeur d'au moins environ 5 nanomètres dans chacune desdites structures antireflets.

3. Film selon la revendication 1 ou 2, dans lequel ladite surface de type verre comprend ladite stoechiométrie de SiO₂ à une profondeur dans l'intervalle allant d'au moins environ 10 nanomètres à environ 100 nanomètres dans chacune desdites structures antireflets.

4. Film selon l'une quelconque des revendications 1 à 3, dans lequel les structures antireflets comprennent des prismes ayant un angle d'extrémité de prisme inférieur à environ 90 degrés, inférieur ou égal à environ 60 degrés, ou dans l'intervalle d'environ 10 degrés jusqu'à environ 90 degrés et un pas dans l'intervalle d'environ 2 micromètres à environ 2 cm.

5. Film selon l'une quelconque des revendications 1 à 4, dans lequel ladite surface de type verre comprend une quantité minimale d'au moins environ 10 % molaires d'atomes de carbone.

6. Film selon l'une quelconque des revendications 1 à 4, dans lequel ladite surface de type verre comprend dans l'intervalle allant d'une quantité minimale d'au moins environ 10 % molaires d'atomes de carbone jusqu'à environ 40 % molaires d'atomes de carbone.

7. Film selon l'une quelconque des revendications 1 à 6, dans lequel lesdites structures antireflets comprennent des prismes ayant un angle d'extrémité de prisme dans l'intervalle d'environ 15 degrés à environ 75 degrés et un pas dans l'intervalle d'environ 10 micromètres à environ 250 micromètres.

8. Film selon l'une quelconque des revendications 1 à 7, dans lequel lesdites structures antireflets comprennent des prismes possédant une hauteur de creux à pic dans l'intervalle d'environ 10 micromètres à environ 250 micromètres.

9. Film selon l'une quelconque des revendications 1 à 8, où le film présente au moins environ 80 % de transmission lumineuse, après que la surface structurée est exposée au test de rétention de salissures, au test de sable tombant, ou à l'un et l'autre des tests.

10. Film selon l'une quelconque des revendications 1 à 8, où ledit film présente un changement de transmission lumineuse inférieur à 8 %, après que ladite surface structurée est exposée à au moins un parmi le test de rétention de salissures et le test de sable tombant.

11. Film selon l'une quelconque des revendications 1 à 10, dans lequel la surface structurée présente un module de conservation d'au moins environ 20 MPa, et le reste de chaque structure antireflet présente un module de conservation plus bas que celui présenté par la surface structurée.

12. Film selon l'une quelconque des revendications 1 à 11, dans lequel le revêtement comprend :
a) d'environ 60 % en poids à environ 95 % en poids des agglomérats de nanoparticules de silice ;
b) d'environ 0,1 % en poids à environ 20 % en poids d'au moins un ou plusieurs tétra-alcoxysilanes ;
c) facultativement d'environ 0 % en poids à environ 5 % en poids d'un agent tensioactif ; et
d) facultativement d'environ 0 % en poids à environ 5 % en poids d'un agent mouillant.

13. Film selon l'une quelconque des revendications 1 à 11, dans lequel le revêtement comprend :
a) d'environ 0,5 % en poids à environ 99 % en poids d'eau ;
b) d'environ 0,1 % en poids à environ 20 % en poids des nanoparticules de silice possédant un diamètre moyen de particule de 40 nm ou moins ;
c) facultativement d'environ 0 % en poids à environ 20 % en poids des nanoparticules de silice possédant un diamètre moyen de particule supérieur à environ 50 nm, dans lequel la somme de b) et c) va d'environ 0,1 % en poids à environ 20 % en poids ;
d) une quantité suffisante d'un acide possédant un pKa de < 3,5 pour réduire le pH jusqu'à moins de 5 ; et
e) facultativement d'environ 0 % en poids à environ 20 % en poids d'un tétra-alcoxysilane, par rapport à la quantité des nanoparticules de silice.

14. Dispositif absorbant l'énergie lumineuse comprenant :
un absorbeur de lumière (32) possédant une face de réception d'énergie lumineuse (32a) ; et
un film structuré antireflet transparent (10), selon l'une quelconque des revendications 1 à 13, disposé de façon à être entre une source d'énergie lumineuse et ladite face de réception d'énergie lumineuse (32a), alors que l'énergie lumineuse provenant de la source est en train d'être absorbée par ledit absorbeur de lumière (32).

15. Procédé de fabrication d'un film structuré antireflet transparent, ledit procédé comprenant :
la fourniture d'un substrat de film structuré possédant une face structurée comprenant des structures antireflets définissant une surface structurée antireflet qui est antireflet pour la lumière, avec au moins les structures antireflets comprenant un matériau élastomère de silicone réticulée ; et
le traitement de la surface structurée antireflet de façon à transformer le matériau élastomère de silicone réticulée définissant au moins une partie substantielle de la surface structurée antireflet en un matériau de type verre comprenant une stoechiométrie de SiO₂, de telle sorte qu'au moins une partie substantielle de la surface structurée antireflet comprend une surface de type verre possédant la stoechiométrie de SiO₂; et
le revêtement de la surface de type verre avec un revêtement d'au moins une couche d'agglomérats de nanoparticules de silice, avec lesdits agglomérats comprenant un réseau poreux tridimensionnel de nanoparticules de silice, et les nanoparticules de silice étant liées à des nanoparticules de silice adjacentes.
